(19) Europäisches Patentamt
European Patent Office
Office européen des brevets

(11) Veröffentlichungsnummer: **0 077 066**
**B1**

(12) # EUROPÄISCHE PATENTSCHRIFT

(45) Veröffentlichungstag der Patentschrift: **20.03.85**

(51) Int. Cl.⁴: **C 09 B 41/00**, C 09 B 29/40

(21) Anmeldenummer: **82109414.1**

(22) Anmeldetag: **12.10.82**

(54) **Verfahren zur Herstellung von Azofarbstoffen durch Diazotierung und Kupplung.**

(30) Priorität: **14.10.81 DE 3140716**

(43) Veröffentlichungstag der Anmeldung: **20.04.83 Patentblatt 83/16**

(45) Bekanntmachung des Hinweises auf die Patenterteilung: **20.03.85 Patentblatt 85/12**

(84) Benannte Vertragsstaaten: **CH DE FR GB IT LI**

(56) Entgegenhaltungen:
**US - A - 3 787 178**
**US - A - 3 897 203**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 13, D-6369 Schöneck 1 (DE)**
Erfinder: **Bodenstedt, Wolfgang, Dr., Diaminstrasse 8, D-6000 Frankfurt am Main 61 (DE)**
Erfinder: **Hänel, Heinz, Eupener Strasse 17, D-6050 Offenbach am Main (DE)**
Erfinder: **Hebestreit, Eberhard, Dr., Hünfelder Strasse 13, D-6000 Frankfurt am Main 61 (DE)**
Erfinder: **Tappe, Horst, Dr., Ringstrasse 9, D-6057 Dietzenbach (DE)**

(74) Vertreter: **Urbach, Hans-Georg, Dr. et al, Hanauer Landstrasse 526, D-6000 Frankfurt am Main 61 (DE)**

EP 0 077 066 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Azofarbstoffen der Formel I

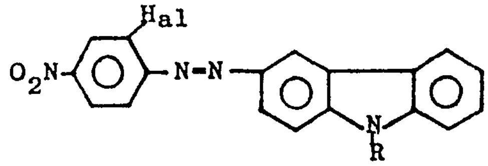

(I)

in der Hal Brom oder Chlor und R gegebenenfalls durch Hydroxy, Cyan, Alkoxy mit 1 bis 4 C-Atomen oder Alkoxycarbonyl mit 1 bis 4 C-Atomen im Alkoxyrest, Alkoxyalkoxycarbonyl mit jeweils 1 bis 4 C-Atomen in den beiden Alkoxyresten, substituiertes Alkyl mit 1 bis 4 C-Atomen oder Wasserstoff bedeutet, durch Diazotierung eines Amins der Formel II

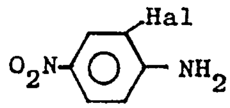

(II)

in Essigsäure mit Nitrosylschwefelsäure und Kupplung des diazotierten Amins auf ein Carbazol der Formel III

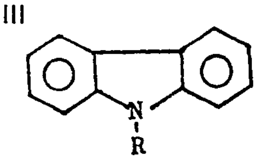

(III)

und Isolieren des Farbstoffs nach beendeter Kupplung.

Azofarbstoffe werden üblicherweise durch Diazotierung und Kupplung im wässerigen Medium hergestellt. Nach diesem Verfahren können Farbstoffe der Formel I nur in schlechten Ausbeuten und Reinheiten hergestellt werden, da die Löslichkeitsverhältnisse insbesondere der Kupplungskomponente ungünstig liegen. Aber auch andere Diazotierungs- und Kupplungsverfahren zur Herstellung der Farbstoffe der Formel I liefern sie nur in mässigen Ausbeuten. Mit den geringen Ausbeuten ist meist das Auftreten von Verunreinigungen verbunden, was dazu führt, dass die so erhaltenen Farbstoffe vor der Verwendung umkristallisiert werden müssen. Bei einigen Verfahren werden zum Lösen der Kupplungskomponente und zum Waschen des Farbstoffs verschiedene organische Lösungsmittel eingesetzt, deren Regeneration äusserst schwierig ist.

So wird der DE-OS Nr. 2212755 die Diazokomponente in Eisessig diazotiert und auf Carbazol, das in Dimethylformamid gelöst ist, gekuppelt und der isolierte Farbstoff mit Methanol und Wasser gewaschen. Bei diesem Verfahren muss somit ein wasserhaltiges Gemisch von drei organischen Lösungsmitteln regeneriert werden.

Nach den Lehren der DE-OS Nr. 2603836 wird Carbazol zur Kupplung in Butanol suspendiert. Die Farbstoffausbeute beträgt hier ca. 82%. Daneben entsteht jedoch 3-Chlornitrobenzol bis zu 18%, das sich bei der Aufarbeitung entweder vom Farbstoff nicht quantitativ abtrennen lässt oder sich in Butanol anreichert und zu Problemen bei der Aufarbeitung führt.

Weiter werden in Collect. Czechoslov. „Chem. Comm.", *25*, 1324 (1960) und *29*, 2264 (1964), Syntheseverfahren beschrieben, bei denen Carbazol in Dioxan bzw. in Ethanol gekuppelt wird. Die Ausbeuten betragen im einen Fall 55%, im anderen Fall sind sie gering.

Aus dem „J. Org. Chem.", *22*, 562 (1957) ist ein Verfahren bekannt geworden, bei dem mit 1,4% Ausbeute 4-Nitranilin auf N-Ethylcarbazol in Eisessig gekuppelt wird.

Die schweizerische Patentschrift Nr. 367254 betrifft ein Verfahren zur Herstellung in Wasser schwer löslicher Monoazofarbstoffe, bei dem nach Beispiel 1 die Kupplungskomponente in Eisessig gelöst wird. Wendet man dieses Verfahren auf die Herstellung des Farbstoffs der Formel I an, in der Hal Chlor und R Ethyl bedeutet, so erhält man eine Ausbeute von 80%. Dieser Farbstoff ist, gefärbt auf Polyester, um ca. 50% farbschwächer als der nach dem erfindungsgemässen Verfahren hergestellte.

Nach Beispiel 1 der US-PS Nr. 3787178 wird die Diazokomponente zu einem Gemisch von Nitrosylschwefelsäure, Eisessig und Propionsäure gegeben. Dann wird eine Lösung von Butylcarbazol in Eisessig hinzugegeben. Wendet man dieses Verfahren auf die Herstellung des Farbstoffs der Formel I an, in der Hal Chlor und R Wasserstoff ist, dann wird ein schwärzliches Pulver erhalten, das den gewünschten Farbstoff nur zu ca. 46 Gew.-% enthält.

Es wurde nun überraschenderweise gefunden, dass man die Nachteile der bisherigen Herstellungsverfahren vermeiden und die Farbstoffe der Formel I in Ausbeuten bis über 99% herstellen kann. Das erfindungsgemässe Verfahren zur Herstellung der Farbstoffe der Formel I ist dadurch gekennzeichnet, dass das Amin der Formel II in 70 bis 100 gew.-%iger Essigsäure bei 10 bis 35 °C mit Nitrosylschwefelsäure diazotiert, der Essigsäuregehalt der Diazolösung durch Zugabe von Wasser auf 60 bis 85 Gew.-% reduziert und bei 15 bis 45 °C ein Carbazol der Formel III in fester Form oder in Form einer Suspension in 60 bis 100 gew.-%iger Essigsäure eingetragen wird.

Als Amine der Formel II kommen 2-Chlor-4-nitranilin und 2-Brom-4-nitranilin in Betracht.

Der für R stehende Alkylrest sowie die als Substituenten für R in Betracht kommenden Alkoxy-, Alkoxycarbonyl- oder Alkoxyalkoxycarbonylreste können geradkettig oder verzweigt sein. Beispiele für Carbazole der Formel III sind: Carbazol, ferner Carbazole, die am Stickstoff durch folgende Reste substituiert sind: Methyl, Ethyl, n-Propyl, i-Propyl, n-Butyl, i-Butyl, sek.-Butyl, 2-Hydroxyethyl, 4-Hydroxyethyl, 2-Methoxyethyl, 2-Ethoxyethyl, 2-n-Propoxyethyl, 2-i-Propoxyethyl, 2-n-Butoxyethyl, 2-i-Butoxyethyl, 3-Methoxybutyl, 4-Methoxybutyl, 2-Cyanethyl, 2-Methoxycarbonylethyl oder 2-Ethoxycarbonylethyl. Bevorzugte Reste für R sind Wasserstoff, Alkyl mit 1 bis 4 C-Atomen oder Cyanethyl, insbesondere dann, wenn diese Reste zusammen mit Hal = Chlor in den Farbstoffen der Formel I auftreten. Das erfindungsgemässe Verfahren eignet sich ganz besonders zur Herstellung des Farbstoffs der Formel I mit Hal = Chlor und R = Wasserstoff.

Das Amin der Formel II wird in 70 bis 100 gew.-%iger, vorzugsweise in 85 bis 95 gew.-%iger, ganz besonders bevorzugt in 88 bis 92 gew.-%iger, Essigsäure bei Temperaturen von 10 bis 35 °C, vorzugsweise 10 bis 30 °C, mit Nitrosylschwefelsäure, zweckmässigerweise unter Rühren, diazotiert. Es ist zweckmässig, wenn das Amin der Formel II vor bzw. während der Diazotierung in gelöster oder in fein verteilter Form in der Essigsäure vorliegt. Die erwünschte Feinverteilung wird z.B. dadurch erreicht, dass das Amin der Formel II in der Essigsäure vor der Zugabe der Nitrosylschwefelsäure unter Rühren bei Temperaturen von 15 bis 50, vorzugsweise 20 bis 40 °C, möglichst vollständig gelöst wird und dass dann die Lösung auf die Diazotierungstemperatur abgekühlt wird, wodurch sich abscheidendes Amin in feiner Verteilung ausfällt.

Die Diazotierung des Amins der Formel II mit Nitrosylschwefelsäure soll rasch, d.h. innerhalb von 5 bis 45, vorzugsweise innerhalb von 5 bis 20 min erfolgen, da sich sonst das Triazen der Formel IV

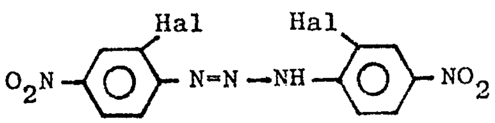

(IV)

bilden würde, das in der eingesetzten Essigsäure sehr schwer löslich ist und daher ausfallen würde. Dies könnte zu örtlicher Überhitzung und damit zur Zersetzung noch vorhandener Diazoniumverbindungen, zum Rührerstillstand und zum Abbruch der gewünschten Reaktion führen. Durch die rasche Zugabe der Nitrosylschwefelsäure wird das Milieu rasch so sauer, dass nur noch wenig freies Amin der Formel II vorliegt und die Triazenbildung weitgehend unterbunden bleibt. In geringem Masse entstandenes Triazen der Formel IV wird bei den beim erfindungsgemässen Verfahren verwendeten Temperaturen zurückgespalten, und das dabei freiwerdende Amin der Formel II wird quantitativ weiterdiazotiert. Da die Zugabe der Nitrosylschwefelsäure exotherm verläuft und andererseits die Diazolösung nicht zu stark erwärmt werden darf, richtet sich die Zugabezeit für die Nitrosylschwefelsäure vor allem nach der Intensität, mit der während der Diazotierung gekühlt werden kann.

Zweckmässigerweise wird mit der Diazotierung knapp oberhalb der Temperatur begonnen, bei der die Lösung oder Suspension des Amins der Formel II fest wird, wobei es dann möglich ist, die Temperatur durch Eiskühlung unter 25 bis 35 °C zu halten. Nach der Zugabe der Nitrosylschwefelsäure wird noch einige Zeit zur Vervollständigung der Diazotierung nachgerührt und dann der Essigsäuregehalt der Diazolösung durch Zugabe von Wasser auf 60 bis 85 Gew.-%, vorzugsweise auf 68 bis 73 Gew.-%, reduziert. Der Essigsäuregehalt der Diazolösung darf durch die Zugabe des Wassers nicht unter 60 Gew.-% fallen, da sich sonst die Kupplungskomponente nicht mehr ausreichend gut löst bzw. die Stabilität der Diazoniumverbindung abnimmt.

Um Nitrosierungsreaktionen an der Kupplungskomponente der Formel III zu verhindern, ist es vorteilhaft, den Überschuss des Diazotierungsmittels in der Diazolösung durch nitritzerstörende Mittel, wie Harnstoff oder Amidosulfonsäure, zu reduzieren oder zu beseitigen. Derartige Mittel können der Diazolösung vor oder nach der Verdünnung mit Wasser zugefügt werden.

Die Kupplung wird bei Temperaturen von 15 bis 45, vorzugsweise 20 bis 35 °C, durchgeführt, indem das Carbazol der Formel III langsam, z.B. im Verlauf von ½ bis 2 h, zweckmässigerweise unter Rühren in die Diazolösung eingetragen wird. Das Carbazol der Formel III soll dabei zweckmässigerweise in feiner Verteilung vorliegen. Beim Eintragen eines Carbazols der Formel III in fester Form kann die Feinverteilung z.B. durch ein vorausgegangenes Mahlen des Carbazols zustande gekommen sein. Beim Eintragen des Carbazols der Formel III in Form einer Suspension in Essigsäure wird das Carbazol der Formel III zweckmässigerweise zunächst in der 5- bis 50fachen Menge 60 bis 100 gew.-%iger Essigsäure durch Erwärmen möglichst vollständig gelöst und dann auf eine Temperatur, die nicht über der Kupplungstemperatur liegt, abgekühlt, wodurch das sich abscheidende Carbazol der Formel III in feiner Verteilung ausfällt. Der Essigsäuregehalt des Kupplungsansatzes darf durch die Essigsäure der Suspension nicht unter 60 Gew.-% gedrückt bzw. nicht über 85 Gew.-% angehoben werden.

Die Zugabezeit für das Carbazol der Formel III richtet sich nach der Ansatzgrösse und wird bei Ansätzen im Kilomassstab zweckmässigerweise auf 1 bis 2 h ausgedehnt.

Die Kupplungstemperatur darf 15 °C nicht unterschreiten, da sich sonst das eingetragene Carbazolderivat zu schlecht löst und zu lange Kupplungszeiten erforderlich sind oder Farbstoffreingehalt und -ausbeute absinken, da der ausfallende Farbstoff Kupplungskomponente einschliesst oder die Diazoniumverbindung sich bei zu langer Reaktionszeit zersetzt. Zweckmässigerweise wird bei 20 bis 30 °C gekuppelt und die Reaktion bei Temperaturen bis 40 °C zu Ende geführt.

Während der Kupplung fällt gebildeter Farbstoff aus, so dass fast die gesamte eingesetzte Essigsäuremenge als Lösungsmittel für die Diazoniumverbindung und die Kupplungskomponente zur Verfügung steht.

Das erfindungsgemässe Verfahren liefert die Farbstoffe der Formel I in Ausbeuten von bis 99% und mehr in hervorragenden Reinheiten. Die höheren Reinheiten bewirken bei der coloristischen Anwendung höhere Farbstärken und zumeist auch bessere Werte für die Trockenhitzeplissier- und Trockenhitzefixierechtheit im Vergleich zu Farbstoffen, die nach anderen Verfahren hergestellt worden sind. Die bei dem erfindungsgemässen Verfahren anfallende Essigsäurelösung kann wieder regeneriert werden.

*Beispiel*

In einem 6-l-Glaskolben werden 172,6 g (1 mol) 2-Chlor-4-nitralinin in 2506,0 g 90 gew.-%iger Essigsäure bei 20 bis 40 °C unter Rühren gelöst. Dann wird die Lösung auf 10 bis 15 °C abgekühlt. Innerhalb 10 bis 15 min lässt man nun unter Kühlung 326,0 g Nitrosylschwefelsäure zufliessen. Dabei steigt die Temperatur im Kolben je nach Kühlintensität auf 20 bis 30 °C. In diesem Temperaturbereich wird zur Vervollständigung der Diazotierung 30 min nachgerührt. Dann wird die Diazolösung mit 680,0 g Wasser verdünnt und auf 30 bis 35 °C erwärmt. Dann werden innerhalb von 30 min bei 30 bis 35 °C 175,5 g Carbazol eingetragen, und anschliessend wird 2 h bei dieser Temperatur gerührt. Zur Vervollständigung der Kupplung wird bei 35 bis 40 °C nachgerührt. Nach 2 bis 3 h ist die Kupplung beendet. Der Ansatz wird dann auf 10 bis 15 °C abgekühlt, der Farbstoff abgesaugt und mit Wasser neutral gewaschen. Das Originalfiltrat und ein erster Teil des Wasserwaschfiltrats werden durch Rektifikation regeneriert.

Farbstoffausbeute: 345,5 g trocken, Reingehalt: 99,6%, entsprechend 98,6% Ausbeute der Theorie; Smp.: 218 bis 224 °C.

Nach dem erfindungsgemässen Verfahren können die in der folgenden Tabelle aufgeführten Farbstoffe hergestellt werden.

*Tabelle*

Farbstoffe der Formel I:

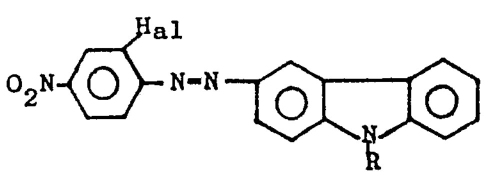

(I)

| Nr. | Hal | R |
|---|---|---|
| 1 | Br | H |
| 2 | Cl | $CH_3$ |
| 3 | Cl | $C_2H_5$ |
| 4 | Br | $C_2H_5$ |
| 5 | Cl | $n\text{-}C_3H_7$ |
| 6 | Cl | $n\text{-}C_4H_9$ |
| 7 | Br | $i\text{-}C_3H_7$ |
| 8 | Cl | $i\text{-}C_4H_9$ |
| 9 | Br | $sek.\text{-}C_4H_9$ |
| 10 | Cl | $(CH_2)_2OH$ |
| 11 | Cl | $(CH_2)_2OCH_3$ |
| 12 | Cl | $(CH_2)_2OC_2H_5$ |
| 13 | Br | $(CH_2)_2\text{-}O\text{-}n\text{-}C_4H_9$ |
| 14 | Br | $(CH_2)_4\text{-}OCH_3$ |
| 15 | Cl | $(CH_2)_2CN$ |
| 16 | Br | $(CH_2)_2CN$ |
| 17 | Cl | $(CH_2)_2COOCH_3$ |
| 18 | Br | $(CH_2)_2COOC_2H_5$ |
| 19 | Cl | $(CH_2)_2COO\text{-}n\text{-}C_3H_7$ |
| 20 | Cl | $(CH_2)_2COO\text{-}n\text{-}C_4H_9$ |
| 21 | Br | $(CH_2)_2COO\text{-}i\text{-}C_4H_9$ |
| 22 | Cl | $(CH_2)_2COO(CH_2)_2OCH_3$ |

**Patentansprüche**

1. Verfahren zur Herstellung von Azofarbstoffen der Formel (I)

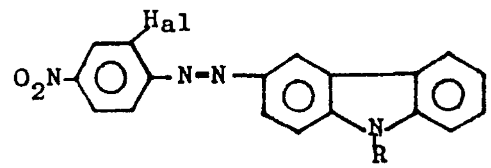

(I)

in der Hal Brom oder Chlor und R gegebenenfalls durch Hydroxy, Cyan, Alkoxy mit 1 bis 4 C-Atomen, Alkoxycarbonyl mit 1 bis 4 C-Atomen im Alkoxyrest, Alkoxyalkoxycarbonyl mit jeweils 1 bis 4 C-Atomen in den beiden Alkoxyresten, substituiertes Alkyl mit 1 bis 4 C-Atomen oder Wasserstoff bedeutet, durch Diazotierung eines Amins der Formel (II)

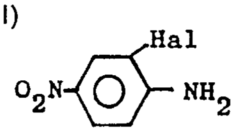

(II)

in Essigsäure mit Nitrosylschwefelsäure und Kupplung des diazotierten Amins auf ein Carbazol der Formel (III)

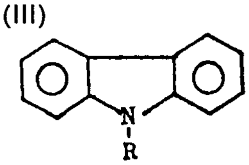

(III)

und Isolieren des Farbstoffs der Formel (I) nach beendeter Kupplung, dadurch gekennzeichnet, dass das Amin der Formel (II) in 70 bis 100 gew.-%iger Essigsäure bei 10 bis 35 °C mit Nitrosylschwefelsäure diazotiert, der Essigsäuregehalt der Diazolösung durch Zugabe von Wasser auf 60 bis 85 Gew.-% reduziert und bei 15 bis 45 °C ein Carbazol der Formel (III) in fester Form oder in Form einer Suspension in 60 bis 100 gew.-%iger Essigsäure eingetragen wird.

2. Verfahren nach Anspruch 1, dadurch gekennzeichnet, dass ein Carbazol der Formel (III) verwendet wird, bei dem R Wasserstoff, Alkyl mit 1 bis 4 C-Atomen oder Cyanethyl bedeutet.

3. Verfahren nach einem der Ansprüche 1 oder 2, dadurch gekennzeichnet, dass ein Amin der Formel (II) mit Hal = Chlor und ein Carbazol der Formel (III) mit R = Wasserstoff verwendet werden.

4. Verfahren nach einem oder mehreren der Ansprüche 1 bis 3, dadurch gekennzeichnet, dass das Amin der Formel (II) in 85 bis 95 gew.-%iger, vorzugsweise 88 bis 92%, Essigsäure diazotiert wird.

5. Verfahren nach einem oder mehreren der Ansprüche 1 bis 4, dadurch gekennzeichnet, dass das Amin der Formel (II) innerhalb von 5 bis 45 min, vorzugsweise innerhalb von 5 bis 20 min, diazotiert wird.

6. Verfahren nach einem oder mehreren der Ansprüche 1 bis 5, dadurch gekennzeichnet, dass der Essigsäuregehalt nach der Diazotierung durch Zugabe von Wasser auf 68 bis 73 gew.-% reduziert wird.

7. Verfahren nach einem oder mehreren der Ansprüche 1 bis 6, dadurch gekennzeichnet, dass das

Carbazol der Formel (III) bei 20 bis 35 °C eingetragen wird.

8. Verfahren nach einem oder mehreren der Ansprüche 1 bis 7, dadurch gekennzeichnet, dass das Carbazol der Formel (III) in feinverteilter, fester Form eingetragen wird.

9. Verfahren nach einem oder mehreren der Ansprüche 1 bis 8, dadurch gekennzeichnet, dass das Amin der Formel (II) vor der Diazotierung in feiner Verteilung vorliegt.

10. Verfahren nach einem oder mehreren der Ansprüche 1 bis 9, dadurch gekennzeichnet, dass das Carbazol der Formel (III) im Verlauf von ½ bis 2 h eingetragen wird.

## Revendications

1. Procédé de préparation de colorants azoïques de formule (I) ci-dessous:

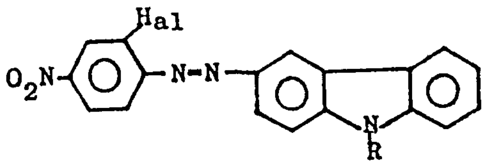

(I)

(dans laquelle Hal désigne le brome ou le chlore et le symbole R l'hydrogène ou un alkyle en $C_1$ à $C_4$ éventuellement substitué par un groupe hydroxy ou cyano, un alcoxy en $C_1$ à $C_4$, un alcoxycarbonyle en $C_1$ à $C_4$ dans le radical alcoxy ou par un alcoxyalcoxycarbonyle dont chaque radical alcoxy est en $C_1$ à $C_4$) par diazotation d'une amine de formule (II):

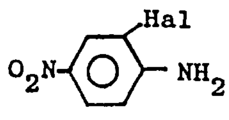

(II)

dans de l'acide acétique avec l'acide nitrosylsulfurique et copulation de l'amine diazotée avec un carbazole de formule (III):

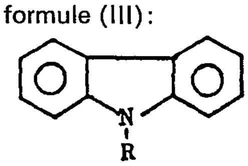

(III)

puis isolement du colorant de formule (I) ainsi formé une fois la copulation terminée, procédé caractérisé en ce que l'on diazote l'amine de formule (II) avec l'acide nitrosylsulfurique dans de l'acide acétique à une concentration de 70 à 100% en poids à une température de 10 à 35 °C, en ce qu'on abaisse ensuite la teneur en acide acétique de la solution du diazoïque entre 60 et 85% en poids en lui ajoutant de l'eau, à une température de 15 à 45 °C, en ce qu'on ajoute à cette solution le carbazole de formule (III) à l'état solide ou en suspension dans de l'acide acétique à une concentration de 60 à 100% en poids.

2. Procédé selon la revendication 1, caractérisé en ce que l'on utilise un carbazole de formule (III) dans lequel R est l'hydrogène, un alkyle en $C_1$ à $C_4$ ou un groupe cyanoéthyle.

3. Procédé selon l'une des revendications 1 ou 2, caractérisé en ce que l'on utilise une amine de formule (II), dans laquelle Hal est le chlore, et un carbazole de formule (III) dans lequel R est l'hydrogène.

4. Procédé selon l'une des revendications 1 à 3, caractérisé en ce que l'on diazote l'amine de formule (II) dans de l'acide acétique à une concentration de 85 à 95% en poids, de préférence de 88 à 92%.

5. Procédé selon l'une des revendications 1 à 4, caractérisé en ce que l'on diazote l'amine de formule (II) en une durée de 5 à 45 min, de préférence de 5 à 20 min.

6. Procédé selon l'une des revendications 1 à 5, caractérisé en ce que, après la diazotation, on abaisse la teneur en acide acétique entre 68 à 73% en poids par une addition d'eau.

7. Procédé selon l'une des revendications 1 à 6, caractérisé en ce que l'on ajoute le carbazole de formule (III) entre 20 et 35 °C.

8. Procédé selon l'une des revendications 1 à 7, caractérisé en ce que le carbazole de formule (III) est ajouté à l'état solide finement divisé.

9. Procédé selon l'une des revendications 1 à 8, caractérisé en ce que l'amine de formule (II), avant la diazotation, est à l'état finement divisé.

10. Procédé selon l'une des revendications 1 à 9, caractérisé en ce que le carbazole de formule (III) est ajouté en un temps de ½ à 2 h.

## Claims

1. Process for the preparation of azo dyestuffs of the Formula (I)

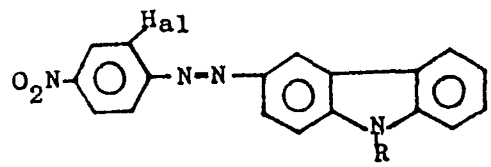

(I)

in which Hal denotes bromine or chlorine and R denotes alkyl which has 1 to 4 C atoms and is optionally substituted by hydroxyl, cyano, alkoxy having 1 to 4 C atoms, alkoxycarbonyl having 1 to 4 C atoms in the alkoxy radical or alkoxyalkoxycarbonyl having 1 to 4 C atoms in each of the two alkoxy radicals or hydrogen, by diazotising an amine of the Formula (II)

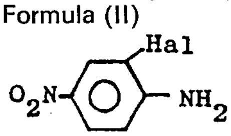

(II)

in acetic acid by means of nitrosylsulphuric acid and coupling the diazotised amine onto a carbazole of the Formula (III)

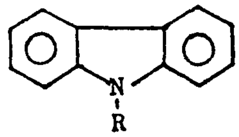

(III)

and isolating the dyestuff of the Formula (I) after the coupling is complete, characterised in that the amine of the Formula (II) is diazotised at 10 to 35 °C in 70 to 100% by weight strength acetic acid, the acetic acid content of the diazo solution is

reduced down to 60 to 85% by the addition of water and, at 15 to 45°C, a carbazole of the Formula (III) is added as a solid or in the form of a suspension in 60 to 100% by weight strength acetic acid.

2. Process according to Claim 1, characterised in that a carbazole of the Formula (III) is used in which R denotes hydrogen, alkyl having 1 to 4 C atoms or cyanoethyl.

3. Process according to Claim 1 or 2, characterised in that an amine of the Formula (II) in which Hal denotes chlorine and a carbazole of the Formula (III) in which R denotes hydrogen are used.

4. Process according to one or more of Claims 1 to 3, characterised in that the amine of the Formula (II) is diazotised in 85 to 95% by weight strength, preferably 88 to 92% strength, acetic acid.

5. Process according to one or more of Claims 1 to 4, characterised in that the amine of the Formula (II) is diazotised within 5 to 45 min, preferably within 5 to 20 min.

6. Process according to one or more of Claims 1 to 5, characterised in that the acetic acid content is reduced after the diazotisation down to 68 to 73% by weight by the addition of water.

7. Process according to one or more of Claims 1 to 6, characterised in that the carbazole of the Formula (III) is added at 20 to 35°C.

8. Process according to one or more of Claims 1 to 7, characterised in that the carbazole of the Formula (III) is added in finely divided solid form.

9. Process according to one or more of Claims 1 to 8, characterised in that before the diazotisation the amine of the Formula (II) is present in finely divided form.

10. Process according to one or more of Claims 1 to 9, characterised in that the carbazole of the Formula (III) is added in the course of ½ to 2 h.